(19) **Europäisches Patentamt / European Patent Office / Office européen des brevets**

(11) **EP 4 575 583 A1**

(12) # EUROPEAN PATENT APPLICATION

(43) Date of publication:
**25.06.2025 Bulletin 2025/26**

(21) Application number: **23218486.1**

(22) Date of filing: **20.12.2023**

(51) International Patent Classification (IPC):
**G01T 1/164** $^{(2006.01)}$  **G01T 1/20** $^{(2006.01)}$
**G01T 1/24** $^{(2006.01)}$

(52) Cooperative Patent Classification (CPC):
**G01T 1/20181; G01T 1/1647; G01T 1/242**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **BRENDEL, Bernhard Johannes**
**5656 AG Eindhoven (NL)**

• **SCHAEFER, Dirk**
**5656 AG Eindhoven (NL)**
• **THRAN, Axel**
**5656 AG Eindhoven (NL)**
• **SIMON, Matthias**
**5656 AG Eindhoven (NL)**
• **VAN NIJNATTEN, Fred Simon Berend**
**5656 AG Eindhoven (NL)**
• **VAN DE HAAR, Peter George**
**5656 AG Eindhoven (NL)**

(74) Representative: **Philips Intellectual Property & Standards**
**High Tech Campus 52**
**5656 AG Eindhoven (NL)**

(54) **SPECTRAL CORRECTION OF DETECTOR BLUR IN DUAL LAYER FLAT PANEL DETECTORS**

(57)      A correction system (CS, CRS) or related method for X-ray based imaging. The system (CS, CRS) may comprise an input interface (IN) through which is receivable X-ray radiation measurement ($\lambda$) data detectable at a sensor layer (LC) of a detector device (XD) of an X-ray imaging apparatus (IA). A corrector component (CC) applies a correction operation to correct for an in-detector originating intensity spread effect experienceable by the receivable measurement ($\lambda$) data, to so obtain a corrected measurement ($\lambda$'). The said correction operation is dependent on different spectra of the X-radiation detectable at the said locations (PX).

FIG. 3

EP 4 575 583 A1

**Description**

FIELD OF THE INVENTION

The invention relates to a correction system for X-ray based imaging, to a related method, to an imaging arrangement, to a computer program element and to a computer readable medium.

BACKGROUND OF THE INVENTION

Flat panel X-ray detectors are often affected by strong detector blur, also known as "veiling glare" or low frequency drop ("LFD").

Attempts to correct for such blur may include deconvolution of detector signals ("LFD correction"), in which an inversion of the blurring process is modelled. J Seibert et al in "Removal of image intensifier veiling glare by mathematical deconvolution techniques", Med Phys, May-Jun, vol12(3), pp 281-8 (1985).

However, some such blurring effects may still remain, which may compromise image quality of X-ray imagery, and thus hamper clinical use of such imagery.

SUMMARY OF THE INVENTION

There may therefore be a need for improved imaging, in particular in X-ray based imaging.

An object of the present invention is achieved by the subject matter of the independent claims where further embodiments are incorporated in the dependent claims. It should be noted that the following described aspect of the invention equally applies to the related method, to the arrangement, to the computer program element and to the computer readable medium.

According to a first aspect of the invention there is provided a correction system for X-ray based imaging, comprising:

- an input interface through which is receivable X-ray radiation measurement data detectable at a sensor layer of a detector device of an X-ray imaging apparatus; and
- a corrector component capable of applying a correction operation to correct for an in-detector-originating intensity spread effect, experienceable by the receivable measurement data, to so obtain a corrected measurement,

wherein the said correction operation is dependent on different spectra of the X-radiation detectable at different locations of the sensor layer.

In embodiments, the corrector component is capable to account for a beam hardening effect as encodable in the measurement data. In particular, local beam hardening effects can be taken into account.

In embodiments, the said spread effect includes a veiling glare type effect.

In embodiments, the said spread effect originates in a radiation sensitive/energy transducer layer of the detector device. The energy transducer layer may convert energy as per in-coming X-ray radiation into another energy form, which may then affect or act on the sensor layer. The detector's sensor layer and the energy transducer layer may be referred to as radiation sensitive layer.

In embodiments, the said correction operation is spatially variable with such measurement data detectable at different locations across the sensor layer of the detector device.

In embodiments, the said correction operation is based on a deconvolution operation.

In embodiments, the deconvolution is in terms of one or more filter kernel functions. In some embodiments, the deconvolution may include a forward operator mapping from spatial domain into frequency domain, and an inverse operator mapping from frequency domain back into spatial domain.

In some embodiments, the inverse operator may be implemented via representation in an operator series expansion, such as in a Neumann series, or other.

In embodiments, the said correction operation is based on a weighted set of one or more filter (kernel) functions, so weighted with one or more weights.

In embodiments, the said one or more weight varies with an intensity detectable at the said location.

In embodiments, a local spectrum determiner is capable of estimating, in an estimation operation, the said spectra locally, and the correction component capable to adapt the correction operation based on the estimatable X-ray spectrum per location.

In embodiments, the estimation operation in based on calibration data representing material through-path length in a reference material (such as water).

In embodiments, the X-ray imaging apparatus is configured for spectral imaging so that the measurement data is detectable at different energies, wherein the estimation operation in based applying a spectral processing algorithm to the measurement data or to image data reconstructable therefrom. Thus, the spectral processing algorithm may be applied in projection domain or in image domain. The spectral processing algorithm may be applied preferably iteratively. In some embodiments, such application may be recursive.

In another aspect the is provided an imaging arrangement comprising the system of any one of the preceding embodiments, and the X-ray detector.

In embodiments, the arrangement may further comprise the imaging apparatus.

In embodiments, the X-ray imaging apparatus is capable of spectral imaging. Spectral imaging may include multi-energy imaging. This may include imaging hardware arrangements, such multi-layer detection, photon-counting, multi-source imaging, source voltage switching, alternate filtration, etc.

In another aspect there is provided a method of correction in X-ay based imaging, comprising:

receiving X-radiation measurement data detectable at a sensor layer of a detector device of an X-ray imaging apparatus; and

applying a correction operation to correct for an in-detector originating intensity spread effect experienceable by the receivable measurement data, to so obtain a corrected measurement, wherein the said correction operation is dependent on different spectra of the X-radiation detectable at the said locations.

In yet another aspect there is provided a computer program element, which, when being executed by at least one computing system, is adapted to cause the at least one computing system to perform the method.

In another aspect there is provided at least one computer readable medium having stored thereon the program element.

The proposed set-up allows correcting for spread effects as may occur inside the X-ray detector's circuitry, as opposed to, and different from, scatter effects that may have happened whilst the impacted X-ray was passing through the object to be imaged. Spread effects have been named as the said "low frequency drop" (LFD), or "veiling glare" in the literature. Similar contrast- reducing effects, other than veiling glare or LFD, are also envisaged herein and can be processed with the principles described herein.

Generally, the in-detector spread effect (eg, LFD) correction may be parameterized individually for different X-ray tube voltages / tube filtrations, since the spread effect/blurring may depend on the energy spectrum of the X-ray radiation detectable at the detector.

The spectrum of the X-ray radiation on the detector does not only depend on tube voltage, but also on attenuation of the X-ray radiation by material in the X-ray beam, due to the beam hardening effect: The X-ray attenuation of an object is energy dependent, commonly attenuating low energy radiation stronger than high energy radiation. The spectral properties of the beam hardening effect may depend on the composition of the attenuating materials as well as on the path lengths through the materials. Thus, with a conventional energy integrating detector, a precise prediction of the final X-ray spectrum on the detector may be difficult. Commonly, as a simplification, the beam hardening effect was neglected in LFD correction, which may be of lesser issue for conventional (non-spectral) 2D or 3D C-arm imaging. The proposed system and method remedy this and take in particular beam hardening caused by the imaged object/patient into account.

This is in particular of benefit for spectral 3D imaging, such as in dual energy cone beam computed tomography, because shortcomings of this simplification may lead to incorrect image values in material images for example, derivable from the dual energy acquisitions, especially near object borders. Near such object borders, the X-ray intensity gradients are largest, and thus an erroneous low frequency drop correction has there the largest impact.

Here, a system and method is introduced that considers beam hardening effects in the spread-effect/LFD correction, and thus improves image quality for spectral images in particular. However, use outside of spectral imaging is also envisaged herein.

The system and method in some embodiments (but not all), is based on an imaging setup to acquire spectral X-ray projection data, e.g., a C-arm system with a spectral detector (dual layer / photon counting detector) , or with fast kVp-switching option, or a C-arm acquiring successively two scans with different kVp setting of the tube, etc.

Based on the acquired spectral projection data, the spatially varying incident X-ray spectrum on the detector for each projection is estimated. However, as said, such a spectral imaging setup is not necessarily required herein. Calibration data based on "test" intensities for different path length through a reference material (eg, water) may be used instead in non-spectral imaging setups. The in-detector spread-effect correction component may apply a locally varying correction on some of each acquired projection, with the correction depending on the spatially varying incident X-ray spectrum/mean energy per pixel or pixel region.

The proposed setup may be used for example in a C-arm (or other X-ray) system that acquires spectral data. Spectral data means in this context that X-ray intensities are acquired with different effective X-ray spectra, either by realizing different tube settings kVp switching, dual scan with different tube voltages), or by using a spectrally resolving detector (such as dual layer or photon counting detector). The effective spectrum may in this context be taken as the part of the incoming spectrum that is convertible to an output signal by a detector channel.

The X-ray spectrum dependent characterization of the detector with respect to the LFD or other spread-effect can be achieved by measuring the blurring effect on the detector for different incident X-ray spectra (e.g., by calibration, utilizing different tube voltages and different attenuating phantoms). At least two different embodiments are possible, which may be referred to herein as the first pass approach and iterative/recursive second pass approach.

In some embodiments of the first pass approach, the local spectrum may be estimated from the local line integral measurement by deriving an equivalent water (or other reference material) thickness/path length value. This equivalent water thickness can be used to derive an effective X-ray spectrum on the detector considering the water length, and the local in -detector spread-effect correction parameters are chosen accordingly.

In some embodiments of the iterative / second pass approach, this may be based on a first spectral decomposition (eg, material or attenuation effect decomposition), from which the spatially varying effective X-ray spectrum can be derived, and the deblurring operation of the detector spread-effect correction can be parameterized accordingly. This locally adaptive detector spread-effect correction will improve accuracy of a subsequent spectral decomposition and in consequence improve the quality of the spectral images. However, since the first spectral decomposition suffers from missing or locally invariant detector spread-effect correction, the first estimated X-ray spectra on the detector, and thus the detector spread-effect correction, might be not accurate. Thus, errors might remain in the subsequent spectral decomposition. To improve, the process of spectral decomposition, X-ray spectrum estimation and detector spread-effect correction can be applied recursively/iteratively, yielding in each iteration more precisely corrected data and thus a more accurate spectral decomposition.

Whilst for dual energy acquisitions with different X-ray source trajectories for both energies the spectral decomposition has to be applied in image space, a projection-based decomposition may still be possible, eg, with a dual layer or photon counting detectors. In the latter case, the incident X-ray spectrum on the detector may be estimated from the spectral decomposition for each projection direction. In case of image base spectral decomposition, the estimation of the X-ray spectrum for each projection can be determined via a forward projection of the decomposed spectral images.

Another advantage of the proposed local adaptation of the detector spread-effect correction is, that also other locally changing physical properties of the detector that influence the spread effect can be considered, amongst which are:

- the detector spread-effect effect changes at the border of the detector;
- the detector spread-effect may depend on the thickness of a scintillator material in a detector of the indirect conversion type, which may not be constant over the whole detector area.

Thus, the proposed method allows reducing such spread-effect and associated blur in image regions close to detector border. Furthermore, constructional imperfections, in particular indirect conversion detectors, can be compensated for with the proposed system and/or method.

In some embodiments, the proposed system may be fully or partly integrated into the detector system or data acquisition system (DAQ), as needed.

"*in-detector spread effects*" may include blur and may degrade image contrast. Such effect may include "low frequency drop" (LFD) or "veiling glare". Such relate to in-detector effects that spread a signal across multiple pixels.

"*user*" relates to a person, such as medical personnel or other, operating the imaging apparatus or overseeing the imaging procedure or those who wish to evaluate the imagery for medical purposes, etc. In other words, the user is in general not the patient, although in some autonomous imaging settings, patient may perform some functions normally associated with the medical/professional user.

BRIEF DESCRIPTION OF THE DRAWINGS

Exemplary embodiments of the invention will now be described with reference to the following drawings, which, unless stated otherwise, are not to scale, wherein:

Fig. 1 show a schematic block diagram of an X-ray based imaging arrangement;
Fig. 2 shows an illustration of spread effects as may occur in X-ray detectors as may be used in the arrangement of Fig. 1;
Fig. 3 shows a block diagram of a correction system configured herein for correcting for spread effects according to some embodiments; and
Fig. 4 shows a flow chart of a computer-implemented method of correcting projection imagery in X-ray imaging.

DETAILED DESCRIPTION OF EMBODIMENTS

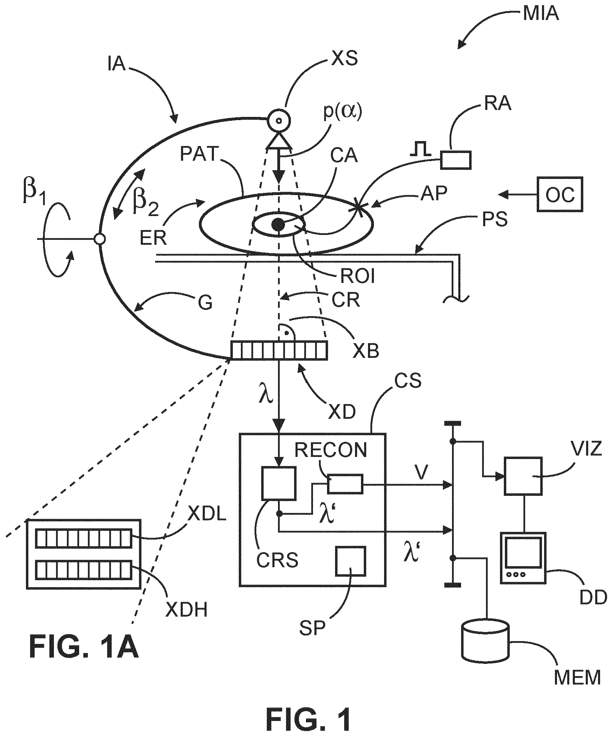

Reference is now made first to the block diagram of Fig. 1, which shows a medical imaging arrangement MIA. The arrangement MIA may include an X-ray based imaging apparatus IA ("imager" for short), and a computing system CS.

The imaging apparatus IA is operable to acquire measurement(s) (data) $\lambda$, which are processable by the computing system CS into medical imagery $V$. Such imagery $V$ can help in therapy, diagnosis, planning or any other medical task. The imagery $V$ may be stored in a memory/storage, etc, may be displayed on a display device DD, such as on a monitor, by operation of a visualizer VIZ, which maps the imagery to a suitable grey- or color palette, to produce a visualization, which can then be rendered for view on the display device DD. For example, a radiologist may review imagery $V$ to come up with findings. In other applications, the imagery may be used to plan radiotherapy session. In yet other embodiments, the imagery $V=V_t$ may be used as a live data stream, for therapeutic application, such as in interventional image guided procedures, such as in cardiac imaging, where a repair of a lesion (eg, of a stenosis) is done during imaging, to so assist in navigation, placement of devices (eg, of a stent), etc.

Broadly, and as envisaged herein in more detail, sometimes image quality of imagery V be degraded, and to account for this, the computing system CS may include a correction system CRS to enhance image quality. In particular, certain undesirable spread effects, that may occur in the measurement process of the measured data $\lambda$, can be reduced, if not eliminated, to yield more detailed, sharper, imagery V, with better contrast between different tissue types for example.

The imaging apparatus IA, being X-ray based as it is, includes an X-ray source XS and an X-ray sensitive detector XD. The X-ray source XS is energized during imaging to cause an X-ray beam XB to issue forth from a focal spot (not shown) of the X-ray source XS. The X-ray source may be an X-ray tube, with anode and electrode in an evacuated body. The energizing may include applying a voltage across the anode and electrode, and current at the cathode to cause electrons to be bubbled off the cathode. The voltage accelerates the electrons towards the anode, The electrons are incident on the anode and are decelerated. This causes the X-ray beam to be radiate off the anode. The X-ray radiation beam XB may be formed from X-ray photons having a certain initial energy spectrum Eo, or mean energy. The X-ray beam XB travels through an examination region ER, a portion of 3D space, in which patient PAT, or at least a region of interest (ROI) to be imaged, is residing therein during imaging. The X-ray sensitive detector XD (simply referred herein as "the detector"), is spatially arranged across the examination region ER, opposite the X-ray source XS, such that the region of interest ROI is positioned in the 3D space of the examination region ER between X-ray source XS and the detector XD.

The X-ray beam XB interacts with matter/tissue that makes up the region of interest. As a result of interaction, the X-ray beam is modified, and it is the so modified beam that is then detected at an X-ray sensitive detector XD as the said measurement data $\lambda$. Because of the transmission of the beam XB through patient, the measurement data forms projection data, and as such it may be referred to herein in the following at places. The projection data $\lambda$ is spatial data as it is made up of individual radiation intensities across the detector XD, and it the set of such radiation intensities that together make up the measurements. Because of the spatial character, the acquired/measured data $\lambda$ may be also referred to herein as "projection imagery/image".

The patient PAT may or may not reside on a patient support PS, such as a couch, table, etc, during imaging. Overall, operation of the imager IA is by an operator console OC, a computing device, that allows supporting/controlling the imaging operation. For example, console OC may allow user to start the imaging operation, energize the source XS, change the imaging geometry to acquire projection data from along different spatial directions $p(\alpha)$, for example to so obtain the best field of view ("FOV") for the medical task at hand. For example, one or more actuators (not shown) may be operable to change one or more of position/orientation of a gantry G, on which gantry G the X-ray source and the X-ray detector may be arranged. The gantry G and its movement may afford various degrees of freedom ("DOF") as indicated in Fig. 1 schematically, and as example, by parameters $\beta 1,2$. For example, in such a manner, an angulation and/or rotation of the X-ray source and/or the X-ray detector can be changed.

Projection imaging may be sufficient in some modalities such as in radiography, CR, or any other, for example in orthopedic application for musculoskeletal imaging tasks or others. However, in more advanced versions, tomographic imaging may be called for, such as in cardiac interventions, or other. Thus, the imager IA may be enabled for multi-directional projection data $\lambda$ acquisition, such as be the rotatable gantry G, as mentioned above. The projection imagery $\lambda$ may be acquired from and along different spatial directions around the ROI, such as in an arc of at least 180° (360° is not required, but not excluded), or sometimes less.

A reconstructor RECON component of the computing system CS may implement a tomographic reconstruction algorithm to process the multi-directions projection data $\lambda=\lambda(\alpha)$ into cross-sectional imagery or even image volume, in short tomographic imagery V, as opposed to mere projection imagery $\lambda$. The angular projection direction "$\alpha$" may relate to different positions of the X-ray source on the scan path orbit in rotational systems, where the imager's setup allows source to rotate around the ROI, thus enabling the said multi-directional projection data $\lambda$ acquisition for tomographic imaging purposes. Tomographic imagery V may provide noninvasive, more detailed, access, to structural details of patient's internal anatomy, with interferences of intervening/overlapping structures removed as may plague projection imagery. The reconstructor RECON may be run as a module in hard- and/or software, or in both, on the computing system. In general, reconstruction is a mapping between two data spaces, the image domain and the projection domain.

The one or more reconstructor units RECON may implement one or plural tomographic reconstruction algorithms. In general, reconstruction algorithms implement a mapping that maps projection data $\lambda$ located in projection domain into image domain. Image domain is a portion of 3D space and is located in the examination region ER of the imaging apparatus, whilst the projection domain is in 2D, and is located at an (X-ray) detector XD of the imaging apparatus IA.

The tomographic reconstruction algorithm may include filtered back-projection (FBP), iterative reconstruction, algebraic reconstruction, etc. In some cases, the reconstruction may be implemented on a dedicated piece of hardware, such as a workstation which may be coupled to a given CBCT or CT scanner.

In general, reconstruction algorithms as used herein by reconstructor RECON may proceed, some in an iterative fashion, to populate voxel grids of the image domain/examination region ER with image values. The image values may be provided in a suitable scale, such as in Hounsfield units (HU), or any other.

The image values may be adapted based on a backward projection and optionally on forward projection, in turns, as required. Thus, the reconstruction algorithms as envisaged in some embodiments may use such back projection operation and forward projection operation FP. Back projection operation maps from projection domain back into image domain, whilst forward projection FP is the reverse operation as it maps from image domain into projection domain.

In some instances, the structure of interest such as vessels, have high radio transparency. In order to boost contrast a contrast agent CA may be administered to the patient through an access point. Delivery apparatus RA such as a pump may be operable to administer such administration agents, such as Iodine, to patient PAT. The contrast agent propagates when blood flow to the region of interest. The time of the acquisition is so timed that acquisition occurs when sufficient contrast agent has accumulated into the region of interest. Cardiac imaging is often supported by such contrast agent administration. Different modalities such as fluoroscopy, angiography or any other are envisaged herein.

As indicated in Fig. 1, the X-ray imaging apparatus may be of the C-arm or U-arm type with a recess formed in the gantry so as to allow access of medical personnel to perform cardiac, orthopedic, or other procedures in image-guided (IG procedures). Having said that as mentioned radiography with limited geometry changes are also envisaged such as for orthopedic application, having said that, tomographic imaging with a doughnut/annulus-shaped CT scanner is not excluded herein, and also envisaged in some embodiment. In CT, the imaging domain/examination region ER may be formed by a bore (the central opening in the annulus structured gantry, often realized as a rotatable gantry carrying source and detector within a stationary gantry, in particular in scanners of the 3rd generation. 4th or higher generation scanner system, that are not necessarily rotational, are not excluded herein. As to imaging geometry, systems with parallel or preferably divergent beam geometry are envisaged herein. For example, cone beam CT setups (CBCT) in combination with detector capable of acquiring 2D (intensity values in rows and columns) projection imagery may be preferred herein, in particular in an interventional imager IA, such as of the said X-/-U-ram type.

On occasion, and as will be explained in more detail below, and preferably in some embodiments, the X-ray imaging apparatus is configured for spectral imaging. Spectral imaging is partly hardware and partly software-based imaging equipment that enables energy discriminative imaging. In some such embodiments, but not in all, the spectral imaging is partly enabled by having a multi-layered detector XD that in essence comprises two detectors, one arranged downstream the other (relative to source XS), as indicated in the inset of Fig. 1A. There is a one X-ray detector XDL, proximal to the X-ray source XS, and underneath it a second X-ray detector XDH, more distal from the X-ray source. They together form a stack of detectors, or dual layer energy detector, as envisaged herein in embodiments. More than two layers may be used in some embodiments, if needed, thus enabling n-fold (n>2) spectral imaging, rather than "dual" (n=2) imaging. Dual imaging however is usually sufficient in most cases. The two component detectors, XDL and XDH, are as such similar or the same construction-wise and in their X-ray radiation detection function, mainly or only their order in the detector stack Fig. 1A being different.

The above-mentioned matter radiation interaction that resulted in the modified beam may include predominately attenuation and scattering, although there may also be phase shifts to some extent, although such phase shifts can be neglected herein in some embodiments (having said, phase contrast or dark field imaging are not excluded herein). The modified beam prior to impinging on an X-ray sensitive surface of the detector XD are subject to beam hardening. This is an effect in which low energy photons tend to be filtered out from beam by patient tissue traversed by the beam. Scattering may also be experienced, thus further contributing to beam's attenuation. Thus, after passage though matter, the beam's energy spectrum, referred to herein simply as the "spectrum", is changed compared to the spectrum of the incoming beam that issued forth at the X-ray source from its's focal spot, prior interaction with the patient's tissue. In particular, the beam's spectrum is shifted to have a higher mean energy, compared to the lower spectrum of incoming beam, thus "hardening" the beam.

A similar, additional instance of such beam hardening occurs when the patient-tissue-modified beam passes through the detector material. Because of the "(at least) double decker" arrangement, in the more proximal detector XDL tends to register photons at a lower spectrum than does the second in the stack, downstream layer XDH, thanks to beam hardening. In other embodiments of spectral imaging hardware, instead of using detector sided solution such as the (at least) dual layer detector as illustrated in Fig. 1 or photon-counting detectors, source-sided solutions are also envisaged. In such source-sided solution, there may be multiple X-ray sources operable at different spectra. In yet other such source-sided embodiments, kVp-switching is used where single source is rapidly switched to realize different emanating spectra. Yet further options, may include, eg, copper filtration, or filtration by other materials, as needed.

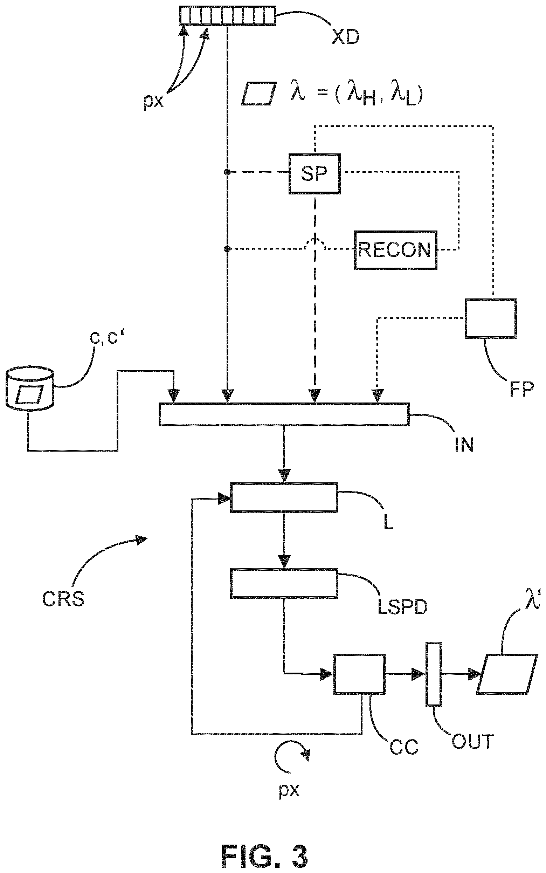

In any of these spectral imaging hardware embodiments, the imager is so configured that at least two-channel projection data in different energy channels is acquired, for some or each exposure. Thus, the acquired projection data $\lambda$ comprises two sets, namely, the projection data $\lambda H$ acquired at a higher, and projection data acquired ($\lambda L$) at lower energy spectrum, respectively: $\lambda = (\lambda H, \lambda L)$. Thus, each detector pixel PX is exposed to X-ray radiation/X-ray photons at a higher spectrum and at a lower spectrum. Thus, each detector pixel PXj is associated with two intensity measurements, one such intensity measurement value per the different energy spectra, $\lambda j = (\lambda Hj, \lambda Lj)$. This multi-energy acquisition per projection direction $\alpha$ can be harnessed computationally by using a spectral processor SP (see Fig. 3 below) to process the multi-spectra projection data $\lambda = (\lambda H, \lambda L)$ to produce for example material specific imaging, such as done in material decomposition.

More generally, spectral imaging is a partly hardware and partly computational imaging modality. That is, spectral imaging allows decomposition into different matter versus radiation effects. For example, one such effect is photoelectric absorption, whilst another effect is scattering, such as Compton scattering. Both effects in combination may be used as a modelling to explain the global, measurably effect of attenuation for example. Thus, spectral imaging allows computing imagery where contrast is solely or predominately due to either one of these effects, Compton scattering or photo-electric effect based absorption. In other embodiments, virtual mono-energetic imagery may be so produced by such decomposition. Such "synthetic" mono-energetic imagery are approximations of imagery as may have been obtained had a mono-energetic X-ray source been used for the exposure, which is usually not the case as most X-ray sources/tubes are polychromatic.

In other embodiments, the effect-based decomposition by spectral imaging is one into the different amounts of attenuation causable by different material types ("base materials") that happen to be in the FOV. Thus, the decomposition of matter-versus-radiation into different effects may also be understood as one of material decomposition, where material specific imagery is produced, referred to as material images of which there are at least two, each image representing again contrast exclusively or predominately caused by the presence of a specific one of the two materials, such as water and contrast agent as is often done in contrast assisted protocols. Other material decompositions such as in bone and water, and virtual contrast, virtual non-contrast, etc, can be produced. Any of the above-described decomposition of matter-versus-radiation into different effects (and others) thanks to spectral imaging are envisaged herein in various embodiments. The described decompositions of matter-versus-(X-ray)radiation into different effects enabled by spectral imaging may be referred to herein in brief as "spectral decomposition(s)" and the imagery of the said various kinds (eg, Compton/Photo-electric, etc) as "spectral imagery." Computationally, spectral decomposition(s) including the various flavors described above may be enabled by a spectral processor SP ( see below at Fig. 3), a computing module, in hard- and/or software, that processes the acquired multi-energy projection data $\lambda = (\lambda H, \lambda L)$ ("spectral projection data") into the spectral imagery.

The spectral processor may use any one of various spectral decomposition algorithms as envisaged herein, including a method previously observed for example by R Alvarez & A Macovski in their US patent US 4,029 963, and the same authors in "Energy-selective Reconstructions in X-ray Computerised Tomography", published in "Physics in Medicine & Biology", vol 21 (5), p 733, 1976) or cognates thereof. In *Alvarez et al,* and cognates thereof, a priori known attenuation coefficients of base materials may be used. Thanks to the projection imagery acquired at the at least two energy spectra, a system of simultaneous equations can be solved. Such system of simultaneous equations is solved to obtain the respective spectral imagery eg of the distribution of the respective base material, etc.

However, spectral imaging useful as it is, is not necessary in all embodiments herein, and purely energy integrating imaging are also envisaged herein in some alternative embodiments.

As to tomographic imaging, if needed, this can be based purely on energy integrative detection, such as previously and conventionally, done but can be combined instead with the described spectral imaging to yield spectral CT type of imaging. In this case, different (sub-)embodiments are envisaged where the spectral processing by spectral processor SP is applied first to the projection raw data in projection domain to produce material specific or effect specific pairs of sets of different spectral projection images, which are then separately reconstructed to yield corresponding material-specific or effect-specific tomographic sectional/volume imagery V. In another (sub)embodiment, the spectral embodiment is done in image domain. Thus, the raw projection data is first reconstructed into volume which is then processed by the spectral processor SP in image domain, to yield the different spectral imagery in image domain, for the two materials or effects, such as different mono-energetic imagery, etc, as needed. Energy integrative detection is the classical way of doing X-ray imaging without spectral imaging, where it is only the intensity or the accumulated energies that are detected without energy discrimination into the different spectra as envisaged in spectral imaging.

But again, tomographic imaging, whilst preferred herein in some embodiments, is not a necessity herein. Instead, purely projection-only based imaging, where it is essential $\lambda$ that is used (eg, displayed, etc), such as in radiography, CR (computed radiography) or bi-planar imaging, are not excluded herein. And any such projection-only imaging may or may not use spectral processing/spectral imaging. Thus, there are at least four different types of X-ray based imaging modalities envisaged herein: projection-only imaging, with or without spectral processing/spectral imaging), or tomographic imaging, with or without spectral processing/spectral imaging.

Referring now in more detail to the correction system CRS as proposed herein, this is operable preferably in projection domain, to reduce certain in-detector XD spread effects that may degrade image quality. Such effects may include the said "low frequency drop" (LFD) effect, or veiling glare effect, or any other such signal spread effect. These effects tend to lower contrast between different tissue types for example, either in spectral imaging or in traditional energy-integrative-only imaging. Thus, the imaging modalities envisaged herein for which the corrector CRS may be used includes purely projection based imaging, with or without tomographic imaging, either merely energy integrative, or spectral, as needed and as described earlier above.

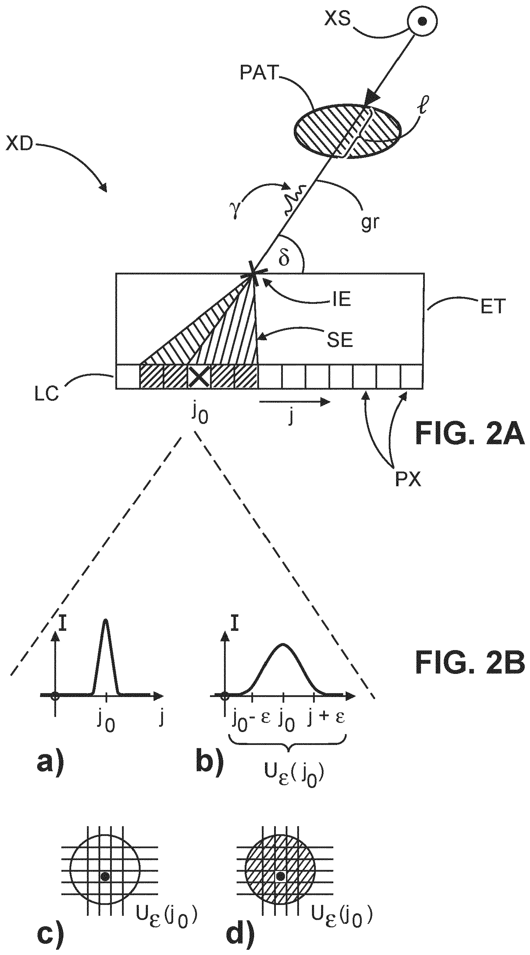

Before explaining the correction system CRS in more detail, reference is made first to Figs 2A, B, which show more details of operation of the X-ray detector XD. The view afforded in Fig. 2A, to which reference is made first, is a sectional one of, in general, a 3D spatial setup. In the illustration of said Fig. 2A, the section plane passes perpendicularly through the detector's face where the incoming radiation to be detected is receivable.

The detector XD is preferably digital, and of the flat panel type, although curved setups which allow for focused imaging for yet better signal efficiency are not excluded. In either case, the detector is preferably one for 2D projection imaging, as opposed to 1D, lineal projection imaging, which however, is also not excluded herein.

Initially and broadly, the X-ray detector XD comprises two components, an energy conversion layer ET, and a localization layer LC, one component coupled to the other, with the energy layer on top (ie, proximal to source XS) the localization layer LC, although a reversed arrangement may also be envisaged. In general, the said layer coupling is such that energy transduced-into in the energy transducer layer EL can act on the localization layer LC. Manners of such action are now described in more detail.

For 2D projection imaging as mainly envisaged, the localization layer LC may be made up of a matrix of the above-mentioned detector pixels PX, each being a sensor element. Each detector pixel PX may have an index, which is usually two dimensional, but it is here for simplicity shown and referred to as a single index $j$. The localization layer LC is to localize the energy transduced-into by layer EL as per its detector pixels PX. The localization layer LC may also be referred to as the sensor layer.

The energy transducer layer ET coupled to the localization circuitry LC is exposed to X-ray radiation that issues from X-ray source. Specifically, in imaging, X-ray beam made up of X-ray photons issues forth from source XS's focal spot, propagates through the patient PAT, has its spectrum modified due to attenuation (mainly absorption and scattering) experienced there, and the stream of photons so attenuated are then impacting on, and interacting with, the energy transducer layer ET (also referred to as "energy transducer"). For example, incoming X-ray photons $\gamma$ having a certain energy spectrum may strike a surface of energy transducer ET, eg at an angle $\delta$. Upon such an interaction event IE, also indicated in the Figure by "$X$", the energy in the photons $\gamma$ is transduced into electric energy as a cause of the interaction event IE. This electric energy in the transducer ET acts on the localization circuitry LC and causes signals to be detected by the pixel elements PX of the localization circuitry LC. Different embodiments are envisaged for the energy transducer ET and its action in the localization circuitry LC. The localization circuitry LC may be capable of performing a second energy transduction, but this may not necessarily be so in all embodiments where such second energy transduction is not needed, as the main function of the localization circuitry LC may be one of spatially resolving the energy as provided by the energy transducer EL.

For example, indirect or direct conversion set-ups of the X-ray detector are envisaged herein. In the direct conversion embodiment, the energy transducer ET comprises of a semi-conductor material. The impact event IE causes a charge cloud to be formed in the semi-conductor material. A voltage is applied across the transducer ET (not shown) which causes the charge cloud to defuse across the semi-detector towards an anode. The anode forms part of the localizer LC, such as a matrix/array of transistors, such as TFTs, each representing one of the pixels PX. The charge cloud impacting those TFT (or other) sensor pixels elicits an electrical response signal, such as a respective charge or voltages. Magnitude of response signal is proportional to the energy of the charge cloud caused by energy spectrum of impacting photons $\gamma$. A/D circuitry in communication with the locator LC converts the electric response signals, voltage or amperage, into respective numbers to form a digital projection image for each exposure $\alpha$. In the projection image, each entry, row & column, corresponds to the location of specifically one of the pixels PX, thus forming a projection image instance $\lambda$, which can then be processed herein for correction, as will be explained in more detail below.

In another embodiment, indirect conversion is used which proceeds according to similar principle but includes as impacting event IE the formation of visible light photons, into which the X-ray photons are transduced-into by transducer ET. In this case, the e-transducer ET is formed from a scintillator material. The light then propagates through the transducer ET and is then detected by detector pixels PX. The detector pixels PX in this setup are laid out in a matrix/array layout as photo-detectors. Again, A/D circuitry may be used to convert the impinging light acting on photodetectors from amperages or voltages as response signals into a set of numbers to form at a given projection direction, an instance of a projection image λ, which can then be processed herein as described below by correction system CRS.

As indicated in Fig. 2A, in either one of these, or other embodiments, of transduction into energy by energy transducer layer ET, there are signal spread events SE involved. In such (undesirable) spread event SE, the transduced-into energy from impact event IE causes the energy to be spread across multiple pixels, rather than causing the energy to be sensed only at an intended/target pixel $j0$. Thus, the spread effect SE in the transducer layer ET is inherited by the sensor layer LC, with more than one pixel being affected for any given ray.

The striking photon may be understood to have propagated prior impact X along a geometrical line or "ray" $\overline{gr}$. The geometric ray $\overline{gr}$, that can be conceptually cast from the focal spot of source XS, through patient PAT tissue, past the interaction point X. and onto an intended/target pixel. Ideally, what is wanted instead, is that the energy into which the energy spectrum impacting X-ray photons γ were transduced into in impact event IE, affect only the said intended pixel $j0$.

The intended pixel j0 is one that is situated where the geometrical ray $\overline{gr}$, along which the incoming photons γ propagated along, intersects the detectors 's locator circuitry LC. Alas, what one has in practice is that the energy's effect is spread out in spread event SE among pixels in a pixel neighborhood $U_\varepsilon(j0)$ of the intended pixel j0. The above holds also for other rays, in fact all such rays, only that the spread may differ from intended/target pixel to pixel PX. Indeed, this spread, its qualities, its spatial reach, etc, is a function of the spectrum of the incoming photons, which in turn is a function of the beam hardening that the photons experienced in their passage through the material PAT along the in-material path length $\ell$ for the geometrical ray $\overline{gr}$ of the intended pixel. Thus, there is a triple dependency which is i) the initial spectrum, ii) the material type, kinds or mix thereof, encountered along path $\ell$, and iii) the length of in-tissue path $\ell$. The proposed correction CRS is configured to account for some, more than one, or all such dependencies, and is operable to adjust its correction operation per pixel PX, based on the spectrum actually seen by that pixel PX. The spread event may be seen to be caused by the body of the energy transducer, and may cause a loss of contrast, hence veiling glare. Spatial focus of the energy is lost, which may be framed as a loss of spatial frequency, hence LFD.

The spread event SE situation is indicated in Fig. 2B below, where an ideal signal behavior is shown. At a), response signal is elicited in isolation only at the intended pixel j0, which is ideally what is wanted. Alas, this is not the case in practice: because of the interfering spreading event SE, a bell shaped or similar, signal behavior is observed. The main impact is at the intended pixel j0, but with significant additional unwanted signal impacts spread out among additional pixels in the said ε-neighborhood $U_\varepsilon(j0)$ of the intended pixel j0. The same situation is shown from a different spatial view at c),d), where a view on the intensity 7 spread SE is conferred along a direction perpendicular to the detector XD's radiation receiving face proximal to source XS. The shown intensity $I$ spread may be understood as a localized (at respective $j0$'s) point spread functions (PSF). The cross-sectional shape, the spread ("range") of intensity as defined by a given PSF h may be understood as a 2D surface in 3D space, with focus ("amplitude") at $j0$. Each PSF $h$ as per a)-c) may be defined by one or more respective parameters. Thus, the PSFs h may be a family of parameterized functions/2D-in-3D surfaces. The parameters may include on or both of said range and amplitude. PSFs may be modelled as having a circular intersection in a plane and perpendicular to the detector's face, but this may not necessarily be so in all cases, and the PSF, the spread of detected intensity, may be conceptualized as any other suitable function of any suitable shape or behavior, eg, 2D Gaussian, elliptic, circular etc. Because of the locally (at j0) different spectra to which the respective pixel PX is exposed to, the behavior, shape etc, of the PSF $hj$ may vary with pixel position $j$. Thus, the parameters $p_j$ of such PSFs $hj$ may differ from, and may depend on, the local X-ray photon $γ_j$ spectrum/mean energy $E_j$ to which any given detector pixel $j$ is exposed.

Thus, in some embodiments, the proposed correction system is such that its correction operation may be understood in terms of the local PSF $hj$, such as in deconvolution-based correction operations as envisaged herein in some embodiments. In some such or similar embodiments, the correction system is configured to adapt the parameter choice $pj$ for some or each pixel (or region thereof) to use there a different PSFs $hj$ that comports with the local energy spectrum $Ej$ exposure at the respective pixel $j$ of pixel region.

In general, the attenuation experienced by the photons, and referring now back to Fig. 2A, is a function of any of the three factors i)-iii) mentioned above: i) the in-tissue path length $\ell$ (the distance through tissue covered by the photons γ), ii) the specific material encountered by photons γ, or the mix thereof, and iii) of the incoming energy spectrum (which may be summarized, as a mean energy $E_0$) of photons γ. This can be summarized in the following generalized Beer-Lambert law:-

$$\lambda = \lambda(j) = I_0 @ E_0 \cdot e^{-\Sigma_i \mu_i^{E_i} \ell_i} \tag{1}$$

with $\lambda$ the measured intensity in projection data λ at a given pixel $j$, and $\mu_i$ a material (i) specific attenuation coefficient with energy dependency $E_j$, and in-tissue path $\ell = \Sigma_i \ell_i$ with material specific segments $\ell_i$ and initial incoming intensity $I0$ at ("@") initial spectrum $E0$. The material specific attenuation coefficients $\mu_i$ are known and have been tabled in reference works vs a range of energies.

It will be immediately apparent from the geometry as per Fig. 2A, that beam hardening will be different along different geometrical rays $\overline{gr}$. As the respective photons head for the respective intended pixel, they will encounter different materials, in different compositions, along different path lengths, etc. Thus, beam hardening effect may differ for photons along different geometric rays, and hence the spectrum detectable at different pixels will differ. That is, the local energy spectra $E_j$ of the photons $\gamma(\overline{gr})$ encountered at each pixel $j$ along different geometric rays will in general be different.

It has been found that behavior, shape (in, short parameters) of PSFs depend strongly on the beam hardening effect of an object. Unlike in the proposed correction approach, beam hardening is usually ignored for in-detector spread effects. For example, for a tube voltage of 120 kV, ignoring beam-hardening has been found to yield PSF parameter discrepancies in excess of 35%.

What is proposed herein, and with reference to Fig. 3, is that the corrector system CRS is capable of differentiating between different spectra, or beam hardened photons, to which the respective spatial pixel is exposed to. Thus, a correction operation, such as de-convolution based or any other, as applied by proposed corrector system CRS to projection data $\lambda$, is spatially dependent, by taking into account the different energy spectra of the photons to which the individual spatially distributed pixels PX of the X-ray detector is exposed to during acquisition.

Thus, in operation, the measured projection data $\lambda$ is received at input interface IN of the correction system CRS. A locator component L identifies the location of different pixels in the projection data $\lambda$. Based on the location, a location specific spectrum determiner LSPD, referred to herein simply as the "spectral determiner LSPD" determines for each pixel location identified by the locator L, the applicable spectrum to which the respective pixel $j$ was exposed to there. A correction component CC then applies a correction operation to each of the signals at the respective pixel locations. Some or each such correction operation is spatially different, and based on the respective energy spectrum determined by the spectrum determiner LSPD for the respective pixel $j$. This is done for all or some pixels of interest PX as indicated by the curved arrow, in iterations if needed. Parallel processing is also envisaged.

Thus, corrected projection data $\lambda'$ is so built up and output at the output port /interface OUT. The corrected projection data may then be available for either viewing in projection imaging, or for reconstruction in tomographic imaging. In either case, spectral processor SP may process, in projection or image domain, the corrected projection data $\lambda'$ into spectral imagery, projection domain or image domain.

Thus, if spectral imaging is done, the spectral processor SP may then operate based on the so quality improved output projection data $\lambda'$. The locator L is different from the locator circuitry LC operable in the detector XD but may form part of the circuitry or may be arranged down-stream thereof. The locator may be arranged downstream the A/D (analog-to-digital) circuitry and may thus be operable in digital domain. The locator L may be logic that reads out from the digital domain $\lambda$. The logic L may transverse the matrix or array structure of the projection data to so identify the respective intensity value associated with the respective position j and access the intensity measurement at the position for passing on to spectrum determiner LSPD.

Different embodiments of the correction system CRS are envisaged herein as can be seen from the different types of input that can be processed herein, indicated by different line types (solid, dashed, and dotted) on top of the Fig. 3 as lead into input interface/port IN.

For example, in some embodiments (solid input data arrow), it is simply the raw projection data that is received at the input port (see the solid arrow). This is preferrable the case in energy integrative settings where no spectral imaging is used. In such embodiments, calibration data c may be used by the spectral determinator LSPD to determine the respective spectrum from the respective measured intensity reading for pixel PX at position j. Processing may be based on the Beer-Lambert formula (1).

The calibration data *c* may include sample attenuation intensities as recorded by imaging a phantom at different path lengths in a prior calibration phase. Preferably, the calibration data is recorded for the given imager IA to be used, in particular using the specific source XS and/or detector XD. Preferably, the specific detector XD is used, or at least one of the same vendor/model type. The phantom may be made up of a reference material, such as water. For example, different attenuations can be recorded for different path lengths ("water columns") through the phantom.

Then, during use in actual imaging of patient PAT, the actually recorded projection data $\lambda$ can then be compared with the calibration data to determine the spectrum, based for example on the Beer-Lambert equation (1), by equating both sides for the calibration measurement and the measured intensity $\lambda(j)$. Because the reference material, paths length and specific attenuation coefficient is used, the equation can be solved for local spectrum/mean energy for pixel j. This may be done for each pixel position or at least for some groups of pixels (regions) to obtain localized spectra estimates.

In other embodiments, where spectral imaging SP is available thanks to the imager IA being so configured, the processing by corrector system CRS may be based on spectral projection imagery (see dashed and dotted data feed arrows).

The spectral projection imagery includes the two sets for high and low spectra $\lambda_j = (\lambda H_j, \lambda L_j)$ as measured by the imager IA, using any one of the above-described detector-sided setups (eg, dual layer detector XDL+XDH, see Fig. 1A), or source-sided setups. Each pixel $j$ is thus associated with two different intensities, representing exposure to photons at least two different energy spectra.

Thus, in this embodiment the spectral processing SP capability may be harnessed herein to compute the local energy spectra. This may be understood as follows: Generally, attenuation of X-ray spectrum in a human body can be described by two attenuation processes with different energy dependencies, namely photo effect and Compton scatter. With the spectral data, it is possible to discriminate how much of the overall attenuation is due to photo effect and how much due to Compton scatter for each detector pixel in each acquisition. This discrimination step is what has been called above spectral decomposition, which may be material based or attenuation effect based, such as Compton vs Photoelectric absorption as mentioned above. Based on the material or effect decomposition, the modification of the (known), initial, incoming tube X-ray spectrum by the attenuating materials/effects can be determined, and thus the locally incident X-ray spectrum on the detector can be calculated for each detector pixel in each projection.

Specifically, based in the material or effect) decomposition as provided by processor SP, given the spectrum D(E) of radiation that aggresses patient, the initial tube XS spectrum S(E), the attenuation spectra $\mu_i(E)$ of the different materials $i$, and the respective path lengths $l_i$ for each material $i$ in the patient, the following may be formulated based on the Beer-Lambert law:-

$$D(E)) = S(E) \cdot e^{-\sum_i \mu_i(E) \cdot l_i} \qquad (1a)$$

Thus, the spectra may be obtained by essentially applying Beers-Lambert law to each energy $E_i$/material $i$ separately.

In this embodiment there are again two sub-embodiments where, as mentioned earlier, the spectral processor SP is involved in different stages and data spaces. In one embodiment, the "projection domain embodiment" (see the dashed feed arrows), the spectral processor is simply applied to the spectral projection raw imagery $\lambda = (\lambda H, \lambda L)$ as measured, to produce, for example, Compton and photo electric effect projection data, or any material decomposition of materials that are known to have resided in the field of view. These two spectrally processed data sets are then used per pixel by the spectral determiner LSPD to determine the different spectra, which can now be done readily such as by material decomposition or other. Preferably, this projection domain processing is done with detector-sided spectral setup, such as with dual layer or photon counting detectors. In such cases, the incident X-ray spectrum on the detector is estimated from the material decomposition for each projection direction. The spectra per pixel, one of the high data set $\lambda H$, and one for the low data set $\lambda L$, is then passed on to the corrector component CC to modulate its correction operation accordingly, based on the respective local spectra, to so obtain the spread corrected projection data $\lambda' = (\lambda L', \lambda H')$.

In some spectral hardware set-ups, such as in multi-source or in switching or other source-sided solutions, it may be preferrable to first do a reconstruction by reconstructor RECON, to map the spectral imagery into image domain, and do a spectral decomposition SP there, for example into Compton and Photoelectric effect, or any material decomposition pair in image domain, and then use forward projector FP to project back into projection domain the two spectral images to obtain the two sets of spectrally processed spectral projection data. Relation (1a) or similar may be used. This will be referred to herein as the "image domain" embodiment. Again, the spectrum determiner LSPD may compute the local spectra per pixel $j$. The correction operation is then again applied per pixel and per determined energy spectrum for the low energy and the high energy projection data $\lambda L, \lambda H$, to obtain the corrected projection data $\lambda' = (\lambda L', \lambda H')$.

While for dual energy acquisitions with different X-ray source trajectories for both energies the material decomposition has to be applied in image space, a projection-based decomposition is possible, e.g., with dual layer or photon counting detectors. In the latter case, the incident X-ray spectrum on the detector is estimated from the material decomposition for each projection direction. In case of image base material decomposition, the estimation of the X-ray spectrum for each projection has to be determined via a forward projection of the decomposed material images.

In either of the spectral embodiments, the above procedure of spectral processing can be operated in iteration to improve image quality. Thus, in the first pass of the above-mentioned spectral processing, the two sets have their respective local spectra determined by the determiner LSPD, and then the correction operation is applied based on the determined spectra. However, these spectra may be inaccurate because of the spread effect. It has been found that this inaccuracy can be reduced by repeating the above computation with the corrected spectral data $\lambda'$, by doing another spectral processing as in the first pass to correct the corrected data from the earlier pass to obtain $\lambda''$. Thus, the above-mentioned image domain or projection domain-based processing may be done as many times over as needed, to produce corrected projection data $\lambda'^{(n)}$, in $n$-passes, as needed, until sufficient convergence is registered. Differences of corrected projection data for each two consecutive passes, $n$-th and $(n-1)$-th, may be formed, and the iteration is halted once the difference $|\lambda'^{(n)} - \lambda'^{(n-1)}|$ drops under a threshold.

To be sure, and as in effect explained above, the spectral processor SP, if available, may be used herein in two different functions: one function is to provide input to the corrector CRS for local spectrum determination, based on which the corrected projection data, itself spectral or not, is computed. Once correction operation is concluded (which may take a number of iterations in some embodiments as explained above), it is then this corrected projection data $\lambda'$ which may then be provided, downstream corrector system CRS, as input in the spectral processor to now obtain, in its second function, as final output the spectral imagery V in projection domain or image domain, as needed. Thus, parts of the spectral processor in the first function may be used for the purpose of spread effect, such a veiling glare of similar, correction. It may then be used again for computing the actual, final, spectral imagery based on so corrected projection data. Even if such a spectral processor SP is provided, it may not actually be used in some embodiments for the final image V, as an energy integrative imaging may be sufficient in some instances. Any spectral imager can be used for conventional energy integrative imaging, but normally not the other way around. Thus, in such embodiments or use cases, the spectral processor may only be used in the first function, but not in the second. As may understood in some embodiments, some of the functions of the local spectral determiner LSPD may be carried out by the spectral processor SP. Thus, the functions may be called upon by local spectral determiner LSPD, by invoking part or all of routines of the spectral processors, by accessing a shared library or hardware/ and or software modules, etc. Thus, some of the functions of spectral processor SP and local spectral determiner LSPD may be overlapping, or both may be integrated into a single functional unit.

Such an iterative/recursive application of the correction operation may also be used for the non-spectral case and is not confined to spectral imaging: after a first correction based on the reference material calibration data, the effective reference material (eg, water) path length could be estimated more accurately, and thus, an iterative/recursive correction setup may improve results.

Referring now in more detail to the correction operation by correction component CC, as said, this will depend locally on the local spectrum Ej determined by the determiner LPSD for each of the above-mentioned embodiments. Thus, correction operation may vary with pixel location.

For example, the correction parameters pj of the PSFs may be adapted per location pixel location *j*, and different ones such parameters pj (eg, amplitude and/or range) may be chosen depending on the local spectrum Ej determined by spectrum determiner LSPD for the said given pixel j.

In some embodiments, but not all, the correction operation is based on de-convolution. In de-convolution, one may assume a convolution model, which includes a point spread function ("PSF") that models the above explained spread effect SE (Fig. 2B). Here, however, there is not merely a single PSF used, but instead plural such PSFs, a family of parameterized PSFs, $h_j$. Thus, the parameters *pj* in this case may include shape, extent and/or other properties of the points spread function per pixel *PX*, such as amplitude and range as illustrated above at Fig. 2B, b),d). The determined local spectrum is mapped by corrector CC to an associated set of such parameters pj, thus specifying the specific PSF *hj* for the given pixel position j. Once the PSF *hj* is specified for given pixel j, de-convolution can be used to recover the original signal λ', thus reducing/eliminating spread effect such as a veiling glare or similar.

In general, the PSF based deconvolution set-up, is one example of the correction operation, may include Fourier transform ("FT") and/or inverse Fourier transform operations.

Conceptually, the follow modeling assumption may be made and the measurement process may be understood in terms of the following inverse problem:-

$$\lambda' * h = \lambda \tag{2}$$

That is, the actual measurements at the detector XD may be understood as a convolution (operator' * ' in (2)) of the wanted, but as yet unknow spread-effect-corrected projection image λ', with a family of PSFs, referred to herein as $h = \{hj\}$. In terms of pixel location *j*, (2) may be written as:-

$$\lambda' (j) * hj = \lambda(j) \tag{3}$$

In (2), this may be based on the following chain of mappings by corrector component CC or by another mapping or look-up functional entity: *Ej -> pj -> hj.* Thus, *hj* is the member of the family of PSFs, whose parameter *pj* are adapted according to local spectrum *Ej,* and as set by the local spectrum determiner LSPD. The corrector CC may then apply the correction operation using a spatial transform, such as Fourier transform $\mathcal{F}$ (with $\mathcal{F}^{-1}$ its inverse), and some of its properties as follows:-

$$\mathcal{F} [ \lambda' (j)] \cdot \mathcal{F}[ hj] = \mathcal{F} [\lambda(j)] \tag{4}$$

$$\lambda' (j) = \mathcal{F}^{-1} [ \mathcal{F}[ hj] ] / \mathcal{F}^{-1} [ \mathcal{F} [\lambda(j)]] \tag{5}$$

Thus, the measured data λ is Fourier transformed into spatial frequency domain, is then inverse transformed back into spatial domain, and the same is done to the local PSF, and a quotient to the right of (5) is formed to so obtain the corrected data. Thus, in deconvolution, the correction operation is based on Fourier transformation and taking quotients. Proper management of "zeros" of the denominator on the left of (5) may be needed. Any one of a number of otherwise known transformational "zeroes"-management policies may be used.

The mapping *Ej -> pj -> hj* by corrector CC or other entity may be based on another set of calibration functions c', that may be different from the calibration data c mentioned earlier in connection with the local spectral determiner LSPD. In this calibration, again, a suitable phantom may be used, that may represent an expected mix of material (water, fat, calcium (bone material), etc) that may reasonable by expected when imaging patients. In a simpler, alternative embodiment, filter sheets (copper, aluminum, Teflon®™, or others) that each represents similar hardening of the effective spectra may be used in the calibration. In the calibration, calibration imaging is done for various energy settings (kVp), and associated test images are obtained where parameters of the PSF model hj, such as its spread (range in mm or other length unit, as appropriate and convenient) and its amplitude (the faction of signal lost through spread effect inside detector) are measured for a selection of energy values. In this manner, PSF parameter vs energy curves are obtained, preferably one such curve per parameter: for example, an amplitude vs energy curve is obtained, and, in some cases, another calibration curve for the range vs energy is obtained, each by measurement in the test images. A linear regression may be done for simplification to obtain the linear curves (lines) for each parameter. This allows for convenient interpolation. For each energy spectrum Ej as provided by local spectrum determiner LSPD, a corresponding set of parameters *pj* may be read off from the calibration curves/lines. The calibration lines/curves may be stored as a LUT (look up table) for quick lookup. Linear regression, whilst preferred, may not be used in some embodiments, in lieu of higher order approximations, as needed.

In (4), (5), the localization j may be applied after transformation and inverse transformation. Thus, the transform is applied to the whole or region of the spatial projection data, and local indexing is done after inverse transform. The adapted transform may need to be applied repeatedly for each pixel to the spatial data λ as whole, or at least to a spatial region as whole that includes the given pixel.

Preferably, in (4)-(5), discrete versions of the Fourier transform may be used. The fast Fourier transform may be used instead of the standard FT, for better responsiveness. Instead of using Fourier transform, other functional transforms known from harmonic analysis (expansion into base functions) may be used instead, such as Laplace transform, Wavelet Transform, Hilbert transform, Hartley transform, etc. The transformation may or may not use complex numbers. When other transforms are used, they may map the convolution operator (" * ") to an operator other than multiplier (" ▪ "), Thus, eqs (4)-(5) may needed to be reframed accordingly. In general, $\mathcal{F}$ may stand for any (forward)operator mapping from spatial domain to frequency domain, and its inverse operator implementing an inversion k from frequency domain back into spatial domain. Operation ns deconvolution such as in (3)-(5) may involve both transformations. Some such Operators may be implemented in terms of kernel function(s) h.

In some embodiments, the point spread function model *h = {hj}* is represented by a bank of filters for example, that is/are spatially varied and adapted to the spatial pixel position *j*. A mask may be used to model the different pixels positions j. The term "filter (kernel)" may be used herein interchangeably with the term "PSF".

The following includes a more detailed explanation of such a de-convolution based spread effect SE correction, as is envisaged herein in some embodiments for a specific family of PSFs *h = {hj}*. However, the below is not at the exclusion of other embodiments, where other filter set-ups may be used to model the spread event SE, or such pixel-position/local spectrum-dependent spatial deconvolution is used without using a Fourier transform based processing as below. The spatial dependency *j* herein may result from the, in general, different local energy spectrum *Ej* to which the respective pixel j is exposed to.

The PSFs/h's may be symmetric, such that a polar coordinate system (r) may be used to formulate such functions *h = {hj}*. A set of Bessel-type functions may be used in some embodiments.

In one exemplary implementation, a weighted filter-bank is used. Another implementation completely shift-variant filter kernels may be user, or others still.

In more detail, and according to some embodiments, the weighted bank of PSFs *h = {hj}* may be used as a set of set of convolution functions:

$$h_i(r) = (1 - \rho_i)\frac{\delta(r)}{2\pi r} + \rho_i \frac{exp(-r/k_i)}{2\pi r k_i} \qquad (6)$$

The bank of filters $h_i$ may comprise *i* = 1, ..., $N_f$ ($N_f \geq 1$) such PSF/convolution/filter functions that may be used in a deconvolutional correction operation as per (2)-(5) above.

In (6), $\delta$ is the Dirac function, r some coordinate in some coordinate system such as polar coordinates, in order to simplify computation due to function shape symmetry. Formulation in terms of other coordinate systems, such as Cartesian, cylindrical, spherical, etc may be used instead, if convenient. The coordinate system formulation may be chosen according to (an)isotropy or not of the detector. Thus, r may measure the radial distance from the origin (the location of the pixel j0 considered). The resulting filter/PSF h may be radially symmetric in most cases. It may be non-symmetric if the detector has for any reason different responses in the two spatial directions, so the correction may be adapted to this possible anisotropy.

In (6), the PSF parameters for each such function $h_i$ may include $p_i = (\rho_i, k_i)$. In some embodiments, $\rho_i$ represents the individual amplitude, and $k_i$ the decay length/range, as noted in Fig. 2B above. The amplitude $\rho_i$ may measure the maximum "height" of the curve $hi$, whilst range $k_i$ refers to the "range" parameter, that is the spread around origin j0. Such range may be defined in terms of distance $\varepsilon = \varepsilon_i$ (see Fig. 2B), such as measurable in $mm$, from origin, beyond which, for any direction, the function $hi$ remains below a negligibility/minimum threshold. The parameters pj, eg, amplitude/range, are local spectrum Ej dependent, and may be chosen according to the mean energy of the spectrum seen by the respective pixel $j$.

A "mask" $w$ may determine the locations $j$ where the filters $hi$ are applied, and/or in which manner. This mask $w$ may include, e.g., an estimate of line integral values (along path $\ell$, Fig. 2A) of the projection along ray $\overline{gr}$ under consideration. These values are mapped for each pixel position $j$ to a corresponding weight $w_j$, which weighs the contribution of each convolution functions $h_i$. The weights may be according to exposure intensity. For example, pixel values with direct radiation (i.e. a line-integral of zero) are mapped to the convolution functions $h_i$ corresponding to the weakest spectrum setting, and with increasing line integral values (i.e. increasing spectrum hardening) convolution functions $h_i$ corresponding to harder spectra are used. Normalized weights may be used. Thus, for every pixel location $j$,

$$\sum_i^{N_f} w_i = 1$$

. A linear or other mapping of the minimal and maximal line integral values in $\lambda$ to functions $h_i$ may be used. Thus, for each projection $\overline{gr}$ that represents a spectrum corresponding to the same equivalent water (or other reference material) thickness under the given tube, filter and detector settings, a corresponding effective energy is determined. The filter bank may also be parameterized according to the effective energy of the spectrum and linear interpolation for the weights may be done, such that at most two of the $w_i's > 0$, for some or each pixel position each $j$. The equivalent reference material thickness is representative of a quantitative increase of the mean energy of the spectrum for a specific ray $\overline{gr}$, and the mapping to the wi's may be configured accordingly to reflect this. For some projections, not all filters of the bank may be used.

Local (at pixel position $j$) forward application of the convolution to projection data $\lambda$ may thus be expressed as:-

$$lfd^j(\lambda) = \sum_i^{N_f}(w_i \cdot \lambda) \otimes h_i = \sum_i^{N_f} \text{ifft}[\text{fft}((w_i \cdot \lambda) \cdot \text{fft}(h_i)] \tag{7}$$

A ("straight") inversion of this may be implemented as:-

$$(lfd^j)^{-1, straight}(\lambda) = \sum_i^{N_f}(w_i \cdot \lambda) \otimes \frac{1}{h_i} = \sum_i^{N_f} \text{ifft}\left[\text{fft}((w_i \cdot \lambda) \cdot \text{fft}\left(\frac{1}{h_i}\right)\right] \tag{8}$$

The following notation is used in the above in Eq (7)-(8):-

⊗: convolution operator

$\mathcal{F}$ = fft[.]: Fast Fourier transform

$\mathcal{F}$ = ifft[.]: Inverse of Fast Fourier transform

The index $i = 1, ..., N_f$? measures the different shift-invariant filters with different parameters $pj$ (eg, amplitude/range), and their result is summed up by spatially varying weights w. Implementation of (7).(8) may include border values management. This may be by padding with linearly interpolated border values, or in other way.

In more detail, and in some embodiments, application of (7), (8) may be as follows. In a calibration, the PSFs $hj$ are measured for different settings of effective spectra, i.e., for different tube settings and filtrations. Optionally, reference materials may be added into the FOV, such as water slabs or a phantom. Each of those effective spectra has a specific mean energy, which may be calculated using numerical simulation tools. From these measurements, the amplitude and range values of the PSF are derived as described above in measurements. This results in the set $c'$ of PSF functions $hj$, parametrized by the effective energy of the spectrum used for the calibration measurement. Due to the calibration effort, this may be done on a relatively coarse detector grid. Similar for the effective spectrum of the patient scan, another look-up-table may be created that, lists the corresponding effective energy for every water length sampled on a finer grid, if needed. Thus, this calibration may yield path-length-vs-mean-energy calibration data. Then, outside calibration, in imaging, for a ray under consideration, an equivalent through-reference material path length (eg, water thickness) is available, thanks to the above described. This reference material path length may then be translated to an effective energy as per the path-length-vs-mean-energy calibration data. This effective energy will probably not be exactly on a sampled grid point.

Therefore, the applicable weights *wi* there may be interpolating from the two or more spatially nearest PSF functions of the filter bank as per calibration data *c'*.

Eqs (7-8) may be used as above in Eqs (4-5) for the deconvolution ansatz. Eqs (7-8) are one non-limiting example of how deconvolution may be used by in-detector spread effect corrector CC. Thus, the correction operation in terms of filter/PSFs *hj* may be based on deconvolution that is locally (pixel or detector region) dependent, as weights *w*. The parameters *pj* of the PSF *hj* is adapted based on the local spectrum *Ej* at pixel *j*. In eqs (7-8), this local dependency is encoded by the distribution of weights $w_i$ per pixel *j*, but any other modelling approach other than by said mask/weights may be used instead.

As to (6), many different types of PSFs *hj* are contemplated, that may be calibrated or fitted according to the measurement procedures described by *Seibert et al* for example, and as cited above. The function types for use as PSFs herein may have one or more of the following properties, such as: being non-zero, rotational symmetric, continuous, single-peak, monotonically decreasing away from a point, are desired properties. Some functions may be "differentiable". Such a function may also be fitted or approximated e.g. by B-splines. Bessel type functions or Gaussians, or bump-type functions may be used. Whilst eq (7)-(8) above was formulated as a filter bank, such is also not necessarily required herein in all embodiments.

As will be gathered from the above, the location *j* was mainly referred to as a pixel location. However, such details down to the pixel level differentiation of the spectra and hence the type or intensity or nature of the correction operation may not be needed in all embodiments. Thus, in any of the above-mentioned embodiments, instead of *j* referring to a specific pixel location, this can also relate instead to groups of pixels, sets of pixels, such as pixel regions, which are then treated herein as having been exposed to a fixed energy spectrum for the region, and the same correction operation may then be applied to the pixels making up the respective region. Thus, the above correction operation adaptation can be applied region-wise ("chunks") for the pixels, rather than operating individually per pixel as indeed envisaged in some embodiments. "Chunking up" of the correction operation in such manner can lead to a certain speed up in computation time and/or memory conservation.

As a refinement, filter kernel (such as eq (6) or other) may be represented as an operator series, such as a truncated such series, for computational efficiency. In some such embodiments, a Neuman series expansion may be used, such as up to the second order ("square") terms, or up to higher orders, as needed. Such representation allows for computational savings, in particular in the inversion back to spatial domain (eq (5), or, more specifically, eq (8)). A result in functional analysis that that states that for a linear operator *A*, that is "close" (in some operator norm) to unity, i.e., *T*: = 1 - *A* ⇒ *A* = 1 - *T*, then the Neumann series can be used to approximate its inverse as:-

$$A^{-1} = (1 - T)^{-1} = \sum_k T^k$$

$$(9)$$

Applied to the instant case (eg, (6) ), the forward kernel may be expressed as:-

$$A = 1 - T = 1 - [1 - h(r)] = 1 - \rho \cdot \left( \frac{\delta(r)}{2\pi r} - \frac{\exp\left(-\frac{r}{k}\right)}{2\pi r k} \right) \qquad (10)$$

This yields for the inversion (eqs (5),(8), or similar):-

$$A^{-1} = \frac{1}{1-T} = \sum_{n=0}^{N} \rho^n \left( \frac{\delta(r)}{2\pi r} - \frac{\exp\left(-\frac{r}{k}\right)}{2\pi r k} \right)^n = Id + \rho \left( \frac{\delta(r)}{2\pi r} - \frac{\exp\left(-\frac{r}{k}\right)}{2\pi r k} \right) + \rho^2 \left( \frac{\delta(r)}{2\pi r} - \frac{\exp\left(-\frac{r}{k}\right)}{2\pi r k} \right)^2 + \cdots$$

$$(11)$$

The expansion can be truncated at the 2nd order term as shown, or may be extended, beyond if needed. In (10) and (11), "1" and "*Id*" refers each to the identity operator. $\rho$ and *k* are as before shorthand for the filter parameters, with index "*j*" dropped for clarity.

The computational effort in (11) is for shift invariant kernels, instead of one FFT and its inverse as before, in the order of $N^f \cdot N^{it,Neumann}$.

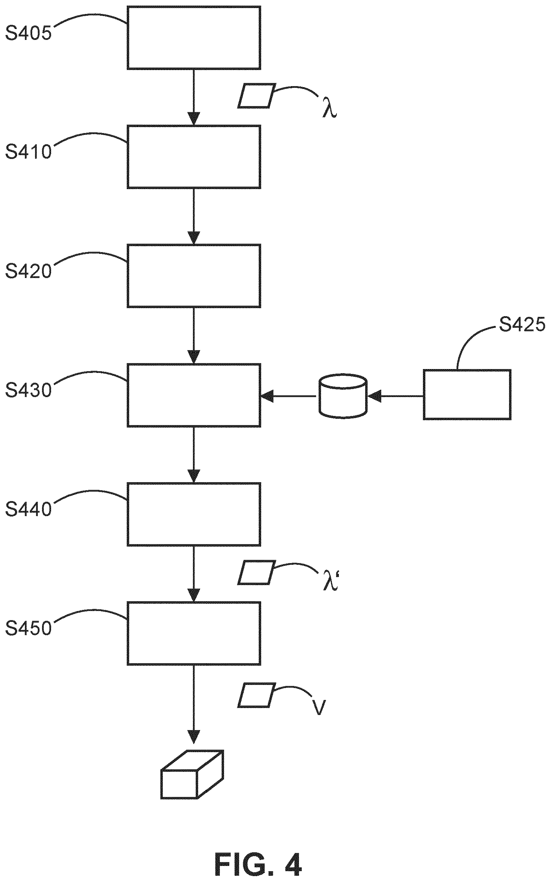

Referring now to the flow chart of Fig. 4, this illustrates steps of a correction method for correcting for spread effects that may occur inside an X-ray detector, in particular inside detector's circuitry, more particularly yet, inside the energy transducer layer and/or sensor layer, the latter may comprise an array of pixels that may respond to energy transducer events. It will be understood however that the below described steps are not necessarily tied to the architecture and systems explained above, but may be understood instead as a teaching in its own right.

At step S405 projection data is acquired by an X-ray imaging apparatus, be it of the radiography or of the tomographic type. The X-ray imaging apparatus may or may not be configured for spectral imaging. Preferably it is.

At step S410 the projection data is received.

At step S420 the projection data is resolved into local measurements, such as intensity values, per detector pixel, or per pixel region, as needed.

At step S430, depending on the localization at step S420, a local energy spectrum is determined based on the intensity value at the location as registered at step S405 for a given pixel. Thus, step S430 results in general in a different energy spectrum/mean energy determination per location.

At step S440, a correction operation is then applied per region or location based on the spectrum so determined for the respective pixel or pixel region. This yields corrected projection data $\lambda$', which can then be made available at step S450 for further processing.

For example, at step S450, a reconstruction operation may be applied to compute volumetric or sectional imagery. In addition, or instead, a spectral processor may be used to produce different versions of spectral imagery (in projection domain or projection domain), as mentioned above.

In embodiments, step S430 may be based on an energy integrative set-up rather than on spectral imaging. If no spectral processing is available, calibration data c may be used to determine the respective spectra/mean energy per location/region. The calibration data may include calibration curve(s) obtained by imaging preferably with the same imager/detector, or with a similar detector, attenuation profiles of a reference material at different paths lengths (thickness/columns). This may be accomplished by imaging in a prior calibration phase S425, prior to use in patient imaging, a phantom fashioned from the reference material at different thicknesses/columns. The curves map energy spectrum (eg, mean energies)) vs paths length.

If spectrum processing is used, the spectral processing capability may not only be used at step S450 at the final step for computing quality enhanced imagery (less or not at all affected by spread effect), but may be used, in addition or instead, at local spectrum determiner step S430. In this embodiment, a spectrum processing is done on the received projection data to determine the different spectra. If such spectral processing is used, this can be applied iteratively/recursively over plural passes, to so iteratively improve the corrected projection data $\lambda$'$^{(n)}$ $n\geq 1$. Such iterative/recursive processing, may also be done in the non-spectral imaging case mentioned above, based on the reference material path length.

The correction S440 operation may include a deconvolution operation, based on locally adapted PSFs as per the respective local spectrum/mean energy. Parameters of a family of such PSFs may be adapted based on the local spectrum. A harmonic analysis may be done, such as a Fourier transform or Fourier transform-based, or other functional transforms. A mapping of the measure values to parameters of the PSF may be done per location. Again, calibration data c' may be used to for this mapping, as mentioned above in connection with Fig. 3.

The above mentioned, "location/position" j may refer to individual pixels as said, but may also refer instead, in a more coarse-grained fashion, to locations of different regions (sets of pixels) across the detector's X-ray sensitive pixel PX surface.

Whilst the pixels have been assumed to be arranged in a matrix structure thanks to the 2D X-ray sensitive pixel surface, this is not necessarily so in all embodiments as one-dimensional detector designs, such as may be used in 1st and 2nd generation type CT scanners, are not excluded. Having said that, the proposed correction method is mainly envisaged for tomographic imaging other than CT. This is because in a diagnostic scanner CT (those with annular body/gantry), the pixels there are usually isolated from each other so that the above-mentioned spread effects are less pronounced, or absent. But outside CT, flat panel detectors, such as with monolithic transducer structure, the locator/sensor circuitry may include pixel structures, without, or with only insufficient, signal isolation usable there for cost saving measures. Thus, the benefits of the proposed spread effect correction effect may be more keenly felt for such non-CT applications. But as said, diagnostic CT scanners applications are not excluded herein at all.

The projection imagery as acquired herein may be still imagery or an over-time stream of projection imagery, such as in fluoroscopy or angiography for example. The above principles can be applied per image frame or projection frame, as needed.

The components of the correction system CRS may be implemented as one or more software modules, run on one or more general-purpose processing units PU such as a workstation associated with the imager IA, or on a server computer associated with a group of imagers.

Alternatively, some or all components of the correction system CRS may be arranged in hardware such as a suitably programmed microcontroller or microprocessor, such an FPGA (field-programmable-gate-array) or as a hardwired IC chip, an application specific integrated circuitry (ASIC), integrated into the imaging system IA. In a further embodiment still, the correction system CRS may be implemented in both, partly in software and partly in hardware.

The different components of the correction system CRS may be implemented on a single data processing unit.

Alternatively, some or more components are implemented on different processing units, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A correction system (CS, CRS) for X-ray based imaging, comprising:

   an input interface (IN) through which is receivable X-ray radiation measurement ($\lambda$) data detectable at a sensor layer (LC) of a detector device (XD) of an X-ray imaging apparatus (IA); and
   a corrector component (CC) capable of applying a correction operation to correct for an in-detector-originating intensity spread effect, experienceable by the receivable measurement ($\lambda$) data, to so obtain a corrected measurement ($\lambda$'),
wherein the said correction operation is dependent on different spectra of the X-radiation detectable at different locations (PX) of the sensor layer (LC).

2. System of claim 1, wherein the corrector component (CC) is capable to account for a beam hardening effect as encodable in the measurement ($\lambda$) data.

3. System of claim 1 or 2, wherein the said spread effect includes a veiling glare type effect.

4. System of any one of the previous claims, wherein the said spread effect originates in a radiation sensitive layer (ET) of the detector device (XD).

5. System of any one of the previous claims, wherein the said correction operation is spatially variable with such measurement data ($\lambda$) detectable at different locations (PX) across the sensor layer (LC) of the detector device (XD).

6. System of any one of the previous claims, the said correction operation is based on a deconvolution operation.

7. System of any one of the previous claims, the said correction operation is based on a weighted set of one or more filter functions, so weighted with one or more weights.

8. System of claim 7, the said one or more weight varies with an intensity detectable at the said location (PX).

9. System of any one of the previous claims, a local spectrum determiner (LSPD) is capable of estimating, in an estimation operation, the said spectra locally, and the correction component capable to adapt the correction operation based on the estimatable X-ray spectrum per location (PX).

10. System of claim 9, wherein estimation operation in based on calibration data (c) representing material through-path length in a reference material.

11. System of any one of the previous claims 9 or 10, wherein the X-ray imaging apparatus (IA) is capable of spectral imaging so that the measurement data ($\lambda$) is detectable at different energies, wherein the estimation operation in based on applying a spectral processing algorithm (SP) to the measurement data ($\lambda$) or to image data reconstructable therefrom.

12. An imaging arrangement (IAR) comprising the system of any one of the preceding claims, and at least a part of the imaging apparatus (IA).

13. Method of correction in X-ay based imaging, comprising:

receiving (S410) X-radiation measurement data detectable at a sensor layer of a detector device of an X-ray imaging apparatus; and
applying (S440) a correction operation to correct for an in-detector originating intensity spread effect experienceable by the receivable measurement data, to so obtain a corrected measurement,
wherein the said correction operation is dependent on different spectra of the X-radiation detectable at the said locations.

14. A computer program element, which, when being executed by at least one computing system (CS), is adapted to cause the at least one computing system (CS) to perform the method as per any one of claim 13.

15. At least one computer readable medium having stored thereon the program element of claim 14.

FIG. 1A

FIG. 1

XS

PAT

$\ell$

XD

$\gamma$

gr

$\delta$

IE

ET

SE

LC

$j_0$

$j$

PX

**FIG. 2A**

I

I

**FIG. 2B**

$j_0$    $j$

$j_0-\varepsilon$  $j_0$  $j+\varepsilon$

**a)**

**b)**

$U_\varepsilon(j_0)$

$U_\varepsilon(j_0)$

$U_\varepsilon(j_0)$

**c)**

**d)**

**FIG. 3**

S405

S410

$\lambda$

S420

S425

S430

S440

$\lambda'$

S450

$\vee$

# FIG. 4

**EP 4 575 583 A1**

Europäisches
Patentamt
European
Patent Office
Office européen
des brevets

# EUROPEAN SEARCH REPORT

Application Number

EP 23 21 8486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STAUB DAVID ET AL: "A digitally reconstructed radiograph algorithm calculated from first principles", MEDICAL PHYSICS, AIP, MELVILLE, NY, US, vol. 40, no. 1, 1 January 2013 (2013-01-01), pages 11902-11902, XP012170897, ISSN: 0094-2405, DOI: 10.1118/1.4769413 [retrieved on 2012-12-14] * abstract; figure 2 * * page 1421, paragraph 2.1 * * page 1422, paragraph 2.2.3 * * page 1421, paragraph 2.2 * | 1-15 | INV. G01T1/164 G01T1/20 G01T1/24 |
| A | SISNIEGA A ET AL: "High-fidelity artifact correction for cone-beam CT imaging of the brain", PHYSICS IN MEDICINE AND BIOLOGY, INSTITUTE OF PHYSICS PUBLISHING, BRISTOL GB, vol. 60, no. 4, 22 January 2015 (2015-01-22), pages 1415-1439, XP020278928, ISSN: 0031-9155, DOI: 10.1088/0031-9155/60/4/1415 [retrieved on 2015-01-22] * figures * | 1-15 | |

TECHNICAL FIELDS
SEARCHED      (IPC)

G01T
A61B

The present search report has been drawn up for all claims

| Place of search | Date of completion of the search | Examiner |
|---|---|---|
| The Hague | 21 May 2024 | Eberle, Katja |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................
& : member of the same patent family, corresponding
    document

EPO FORM 1503 03.82 (P04C01)

## REFERENCES CITED IN THE DESCRIPTION

**Patent documents cited in the description**

- US 4029963 A, R Alvarez & A Macovski

**Non-patent literature cited in the description**

- **J SEIBERT et al.** Removal of image intensifier veiling glare by mathematical deconvolution techniques. *Med Phys*, May 1986, vol. 12 (3), 281-8

- Energy-selective Reconstructions in X-ray Computerised Tomography. *Physics in Medicine & Biology*, 1976, vol. 21 (5), 733